# EUROPEAN PATENT SPECIFICATION

(11) **EP 2 952 641 B1**
(45) Date of publication and mention of the grant of the patent: **12.04.2017**
(21) Application number: 15170064.8
(22) Date of filing: 01.06.2015
(51) Int. Cl.: E03C 1/042, E03C 1/04

(54) **METHOD FOR MANUFACTURING A FAUCET.**
VERFAHREN ZUR HERSTELLUNG EINER AUSLAUFARMATUR.
PROCÉDÉ DE FABRICATION D'UN ROBINET.

(30) Priority: 05.06.2014 KR 20140068078
(43) Date of publication of application: 09.12.2015
(73) Proprietor: JCL Industry Co., Ltd., Gyeonggi-do 415-818 (KR)
(72) Inventor: LEE, Jae Chun, 415-809 Gyeonggi-do (KR)
(74) Representative: Stevens, Jason Paul

(56) References cited:
- EP-A1- 0 576 391
- WO-A1-2014/014765
- GB-A- 2 193 280
- JP-A- 2001 220 781
- US-A1- 2012 091 626
- US-A1- 2013 174 929

## Description

### BACKGROUND OF THE INVENTION

### Field of the Invention

The present invention relates to a method for manufacturing a controlling valve (hereinafter, which is referred to as 'faucet'), and more particularly, to a method for manufacturing a faucet mounted on a wash basin, bathtub, shower, and kitchen sink to supply water therefrom and to a faucet produced by the method.

### Background of the Related Art

Generally, a faucet is mounted on a wash basin, bathtub, shower, and kitchen sink to supply hot and cool water to a user, while being cooperatively operated with a boiler.

That is, the faucet is connected to the front end portions of buried cool and hot water pipes, irrespective of a specific position, and performs the supply of cool and hot water, the stop of the supply, and the free adjustment of the mixed amount of the cool and hot water by means of the manipulation of an opening/closing lever, thus supplying the cool and hot water to a user with his or her desired water temperature and his or her desired quantity of water discharged from the faucet.

Generally, the faucet has cool and hot water inlet pipes into which cool water and hot water are introduced, a water outlet pipe of mixed water, and adjusting parts performing the supply of cool and hot water, the stop of the supply, and the adjustment of water temperature and quantity of water discharged by means of the manipulation of the opening/closing lever, while having respective different positions in accordance with the use purposes thereof, that is, the use purposes of kitchen sink, wash basin and bathtub of bathroom, and kitchen sink. However, the typical faucets have the same configurations as each other in such a manner as to perform the supply of cool and hot water, the stop of the supply, the quantity of mixed water, and the supply of mixed water through the adjustment of the quantity of water discharged.

Generally, the faucet includes a body and a plurality of parts (valves, opening/closing lever, packing, connection hose and the like) combined to each other, and the body is made of brass easily mouldable.

The faucet made through the moulding should form passages at the inside thereof, through which the mixed water having a given temperature under a user's adjustment flows via the cool and hot water flow path pipes and the adjusting parts, and accordingly, the body is moulded in the state where the passages communicate with each other on one side surface thereof. Further, a separate sealing part is coupled to the open portion of one side surface of the body moulded so as to seal the open portion of the body, without having any leakage of water.

However, the moulding work for making the body of the faucet may cause serious environmental pollution, and further, harmful components (graphite and impurities) may remain on the body of the faucet according to the characteristics of the moulding work, so that when the faucet is used as a product, the harmful components may be mixed with the water discharged from the faucet. Additionally, since the moulding work for the faucet is generally conducted in weak circumstances, manufacturers are reluctant to do the moulding work.

On the other hand, while the body of the faucet is being used as a product for a long period of time, it may be decayed to a higher degree than that of the body of the faucet as an initial product due to tap water, thus causing serious sanitary problems.

When hot water is used, moreover, heat is fast transmitted to the faucet body made of brass, and at this time, if the old and the weak or the children are contacted with the hot faucet body, they may easily get burnt.

So as to remove the above-mentioned problems, recently, a faucet made of a synthetic resin, not through moulding, has been introduced and used through simple adjustment.

According to the configuration of the conventional faucet, for example, cool and hot water flow path pipes fastened to cool and hot water pipes to flow cool and hot water therethrough, a mixing pipe connected to the cool and hot water flow path pipes to mix the cool and hot water with each other, and a water discharging pipe discharging the water mixed in the mixing pipe are separately connected to have given shapes according to the use purposes of the faucet, and they are fastened surroundedly to segmented bodies by means of fastening screws, thus taking a given shape of the faucet.

Since the faucet made of the synthetic resin does not have any moulding work, it can solve the above-mentioned problems and can be easily made, thus enhancing the manufacturing cost and the productivity, but while the faucet made of the synthetic resin is being frequently contacted with cool and hot water, harmful components of the synthetic resin may be supplied to a user, in the state of being contained in the cool and hot water, due to the chemical reaction with chlorine contained in water.

Other forms of faucet are known from US 2012/0091626 (on which the preamble of claim 1 is based), JP 2001-220781, EP 0576391, WO 2014/014765, US 2013/0174929 and GB 2193280.

### SUMMARY OF THE INVENTION

Accordingly, the present invention has been made in view of the above-mentioned problems occurring in the prior art, and it is an object of the present invention to provide a method for manufacturing a faucet that is capable of reducing the manufacturing cost thereof.

It is another object of the present invention to provide a method for manufacturing a faucet that is capable of preventing harmful components of a synthetic resin from being supplied to a user in the state of being contained in cool and hot water, while the faucet made of the synthetic resin is being frequently contacted with the cool and hot water.

It is yet another object of the present invention to provide a method for manufacturing a faucet that is capable improving the productivity through double injection moulding and also decreasing the failure rate in manufacturing process.

It is still another object of the present invention to provide a method for manufacturing a faucet that is capable of preventing the old, the weak and the children from getting burnt even while they use hot water.

It is another object of the present invention to provide a method for manufacturing a faucet that is capable of improving the manufacturing workability thereof.

It is yet another object of the present invention to provide a method for manufacturing a faucet that is capable of preventing cool and hot water flow path pipes from being twisted while in use.

It is still another object of the present invention to provide a method for manufacturing a faucet that is capable of removing separate process like welding or soldering in the assembling process of the parts of the faucet.

It is yet still another object of the present invention to provide a method for manufacturing a faucet that is capable of enhancing the workability thereof and the outer appearance thereof.

To accomplish the above-mentioned objects, according to a first aspect of the present invention, there is provided a method for manufacturing a faucet including the steps of: preparing metallic parts and non-metallic parts for making the faucet, the non-metallic parts having a manifold adapted to supply cool and hot water supplied thereto to a controlling member, and cool and hot water flow path pipes; coupling the cool and hot water flow path pipes to the manifold or coupling the cool and hot water flow path pipes to flow connection members and the manifold; moulding the manifold to which the cool and hot water flow path pipes and the flow path connection members are coupled or the manifold to which the cool and hot water flow path pipes are coupled in such a manner as to inject a liquid type ABS resin into a space portion of a double injection mould and to fill the space portion with the ABS resin, so that the manifold to which the cool and hot water flow path pipes are coupled is surrounded with a body; and assembling the body in which the manifold coupled to the cool and hot water flow path pipes is accommodated to other parts constituting the faucet.

According to the present invention, preferably, the cool and hot water flow path pipes are made of a polypropylene (PP) or polyethylene (PE) resin by means of injection moulding.

According to the present invention, preferably, the cool and hot water flow path pipes are L-shaped, while having a square cross-section, and the manifold has coupling grooves adapted to connect one end portion of the cool and hot water flow path pipes thereto.

According to the present invention, preferably, the cool and hot water flow path pipes are linearly formed, while having a square cross-section, in such a manner as to be connected to coupling grooves of the manifold on one end portion thereof and to the flow path connection members on the other end portion thereof, the flow path connection members being made of a polypropylene (PP) or polyethylene (PE) resin.

According to the present invention, preferably, the manifold is made of a polypropylene (PP) or polyethylene (PE) resin, and the body is made of an ABS resin.

To accomplish the above-mentioned objects, according to a second aspect of the present invention, there is provided a method for manufacturing a faucet including the steps of: preparing metallic parts and non-metallic parts for making the faucet, the non-metallic parts having a manifold adapted to supply cool and hot water supplied thereto to a controlling member, and cool and hot water flow path pipes; coupling the cool and hot water flow path pipes to the manifold; moulding the manifold to which the cool and hot water flow path pipes are coupled in such a manner as to inject a liquid type ABS resin into a space portion of a double injection mould and to fill the space portion with the ABS resin, so that the manifold to which the cool and hot water flow path pipes are coupled is surrounded with a body; and assembling the body in which the manifold coupled to the cool and hot water flow path pipes is accommodated to other parts constituting the faucet.

According to the present invention, preferably, the cool and hot water flow path pipes include horizontal members arranged in parallel with the body, vertical members extended vertically from the end portions of the horizontal members, and extension members formed unitarily with the connection portions between the horizontal members and the vertical members.

According to the present invention, preferably, the extensions members are sealed by means of fitting members formed on both sides of the body in such a manner as to be passed through the body.

To accomplish the above-mentioned objects, according to a third aspect of the present invention, there is provided a method for manufacturing a faucet including the steps of: preparing metallic parts and non-metallic parts for making the faucet, the non-metallic parts having a manifold adapted to supply cool and hot water supplied thereto to a controlling member, cool and hot water flow path pipes, a lower body and an upper body; coupling the cool and hot water flow path pipes to the manifold or coupling the cool and hot water flow path pipes to flow connection members and the manifold; moulding the manifold to which the cool and hot water flow path pipes and the flow path connection members are coupled or the manifold to which the cool and hot water flow path pipes are coupled in such a manner as to inject a liquid type ABS resin into a space portion of a double injection mould and to fill the space portion with the ABS resin, so that the manifold to which the cool and hot water flow path pipes are coupled is surrounded with the lower body and the upper body; and assembling the lower body and the upper body in which the manifold coupled to the cool and hot water flow path pipes is accommodated to other parts constituting the faucet.

To accomplish the above-mentioned objects, according to a fourth aspect of the present invention, there is provided a method for manufacturing a faucet including the steps of: preparing metallic parts and non-metallic parts for making the faucet, the non-metallic parts having a manifold adapted to supply cool and hot water supplied thereto to a controlling member, cool and hot water flow path pipes, and upper and lower discharging pipes having coupling protrusions formed on the front end portions thereof; coupling the upper and lower discharging pipes and the cool and hot water flow path pipes to the manifold; moulding the manifold to which the upper and lower discharging pipes and the cool and hot water flow path pipes are coupled in such a manner as to inject a liquid type ABS resin into a space portion of a double injection mould and to fill the space portion with the ABS resin, so that the manifold to which the upper and lower discharging pipes and the cool and hot water flow path pipes are coupled is surrounded with a body; and assembling the body in which the manifold coupled to the cool and hot water flow path pipes is accommodated to other parts constituting the faucet, wherein the manifold, the upper and lower discharging pipes, and the cool and hot water flow path pipes are made of a polypropylene (PP) or polyethylene (PE) resin, and the manifold has a coupling protrusion formed unitarily with one side of the outer peripheral surface thereof.

To accomplish the above-mentioned objects, according to a fifth aspect of the present invention, there is provided a method for manufacturing a faucet including the steps of: preparing metallic parts and non-metallic parts for making the faucet, the non-metallic parts having a manifold adapted to supply cool and hot water supplied thereto to a controlling member, cool and hot water flow path pipes, and a discharging pipe; coupling upper and lower flow path pipes constituting the discharging pipe and the cool and hot water flow path pipes to the manifold; moulding the manifold to which the upper and lower flow path pipes and the cool and hot water flow path pipes are coupled in such a manner as to inject a liquid type ABS resin into a space portion of a double injection mould and to fill the space portion with the ABS resin, so that the manifold to which the upper and lower flow path pipes and the cool and hot water flow path pipes are coupled is surrounded with a body; and assembling the body in which the manifold coupled to the cool and hot water flow path pipes is accommodated to other parts constituting the faucet, wherein the manifold, the cool and hot water flow path pipes, and the upper and lower flow path pipes are made of a polypropylene (PP) or polyethylene (PE) resin, and the manifold has a coupling protrusion formed unitarily with one side of the outer peripheral surface thereof.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIGS.1 and 2 are exploded perspective views showing a faucet manufactured by a method for manufacturing the faucet according to a first embodiment of the present invention;
FIG.3 is an exploded perspective view showing a faucet manufactured by a method for manufacturing the faucet according to a second embodiment of the present invention;
FIGS.4 and 5 are exploded perspective views showing a faucet manufactured by a method for manufacturing the faucet according to a third embodiment of the present invention;
FIG.6 is a flow chart showing the method for manufacturing the faucet according to the first embodiment of the present invention;
FIGS.7 and 8 are exploded perspective views showing a faucet manufactured by a method for manufacturing the faucet according to a fourth embodiment of the present invention; and
FIG.9 is an exploded perspective view showing a faucet manufactured by a method for manufacturing the faucet according to a fifth embodiment of the present invention.

### DETAILED DESCRIPTION OF THE PREFERRED EMBODIMENTS

Hereinafter, an explanation on a method for manufacturing a faucet according to the present invention will be in detail given with reference to the attached drawing.

In the description, the terms as will be discussed later are defined in accordance with the functions of the present invention, but may be varied under the intention or regulation of a user or operator. Therefore, they should be defined on the basis of the whole scope of the present invention.

### [First embodiment]

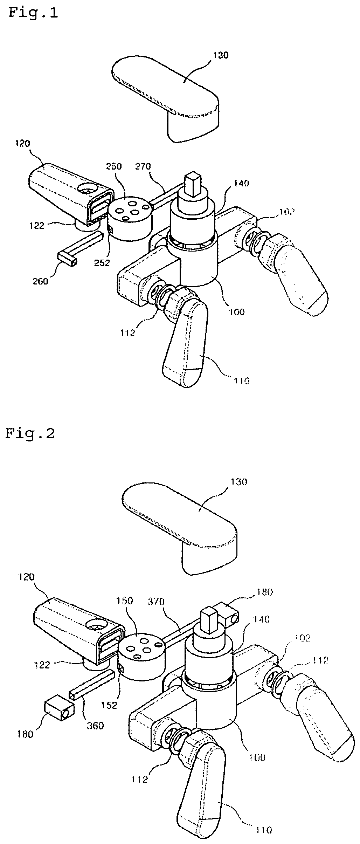

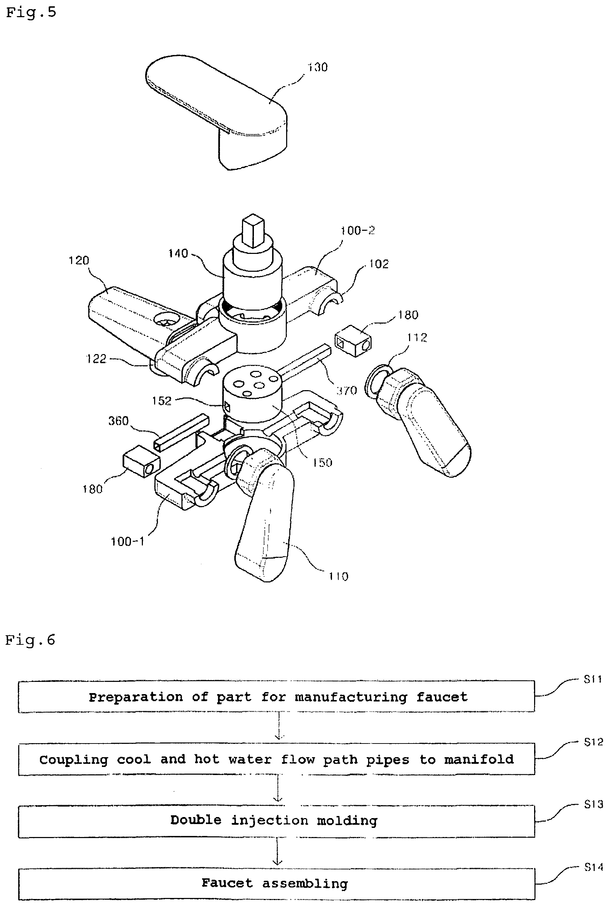

FIGS.1 and 2 are exploded perspective views showing a faucet manufactured by a method for manufacturing the faucet according to a first embodiment of the present invention and FIG.6 is a flow chart showing the method for manufacturing the faucet according to the first embodiment of the present invention. At this time, the corresponding parts in FIGS.1 and 2 are indicated by corresponding reference numerals.

Referring to FIGS.1 and 2, a method for manufacturing a faucet according to a first embodiment of the present invention includes part preparing step S11, cool and hot water flow path pipe coupling step S12, double injection moulding step S13, and assembling step S14.

First, parts for manufacturing a faucet are prepared (at step S11). At this time, the parts include metallic parts and non-metallic parts. The metallic parts include a pair of eccentric sets 110 connected to cool and hot water pipes (not shown) installed on a wall surface, a discharging pipe 120 discharging cool and hot water and mixed water therefrom, a water outlet 122 formed unitarily with the discharging pipe 120 to provide the cool and hot water and the mixed water moving through the discharging pipe 120 for a user, and an opening/closing lever 130.

On the other hand, the non-metallic parts include a controlling member 140 (which is called a cartridge) adapted to control the supply and discharge of the cool and hot water and the mixed water; adjusting members, that is, manifolds 150 and 250 adapted to seat the controlling member 140 therein to provide the supplied cool and hot water to the controlling member 140, cool water flow path pipes 260 and 360, and hot water flow path pipes 270 and 370.

At this time, the cool water flow path pipes 260 and 360 and the hot water flow path pipes 270 and 370 are made of a polypropylene (PP) or polyethylene (PE) resin having no ill effects on the human by means of injection moulding.

Referring first to FIG.1, the cool and hot water flow path pipes 260 and 270 are L-shaped, while having a square cross-section, and the manifold 250 has coupling grooves 252 having a square cross-section adapted to connect one end portion of the cool and hot water flow path pipes 260 and 270 thereto. At this time, there are no separate O-rings for coupling the cool and hot water flow path pipes 260 and 270 with the manifold 250. As mentioned above, if the cool and hot water flow path pipes 260 and 270 have the square cross-sectional shape, they are not twisted at all while in use.

Referring to FIG.2, next, the cool and hot water flow path pipes 360 and 370 are linearly formed, while having a square cross-sectional shape, and they are connected to coupling grooves 152 of the manifold 150 on one end portion thereof, while being connected to separate flow path connection members 180 on the other end portion thereof. The flow path connection members 180 have a generally rectangular shape in such a manner as to be connected to the cool and hot water flow path pipes 360 and 370 on one side thereof and connected to the cool and hot water pipes mounted on the wall surface through a body 100 and connection pieces 102 on the other side thereof.

At this time, the manifold 150 is made of a polypropylene (PP) or polyethylene (PE) resin having no ill effects on the human by means of injection moulding, and the body 100 is made of an ABS resin in view of manufacturing cost and productivity.

After that, the prepared parts, that is, the cool and hot water flow path pipes are coupled to each other (S12). As shown in FIG.1, the cool and hot water flow path pipes 260 and 270 are coupled to the manifold 250, or, as shown in FIG.2, the cool and hot water flow path pipes 360 and 370 are coupled to the flow path connection members 180 and the manifold 150.

At this time, the flow path connection members 180 are made of the polypropylene (PP) or polyethylene (PE) resin having no ill effects on the human.

Next, the manifold 150 to which the cool and hot water flow path pipes 360 and 370 and the flow path connection members 180 are coupled or the manifold 250 to which the cool and hot water flow path pipes 260 and 270 are coupled is moulded in such a manner as to inject a liquid type ABS resin into a space portion of a double injection mould (not shown) and to fill the space portion with the ABS resin (at step S13), so that the manifold 150 or 250 to which the cool and hot water flow path pipes 260, 360 and 270, 370 are coupled is surrounded with the body 100 designed to have a given shape.

After that, the body 100 in which the manifolds 150 or 250 coupled to the cool water flow path pipes 260 and 360 and the hot water flow path pipes 270 and 370 is accommodated is assembled to other parts constituting the faucet.

That is, the eccentric sets 110 are connected to the cool and hot water pipes, and then, the body 100 is connected to the eccentric sets 110 by means of the connection pieces 102 and packings 112 disposed on the rear surface thereof.

Further, the controlling member 140 connected to the manifold 150 or 250 and the opening/closing lever 130 are assembled to the top surface of the body 100, and the discharging pipe 120 is assembled to the front surface of the body 100.

If water is turned on through the manipulation of the opening/closing lever 130 of the faucet assembled in the above-mentioned manner, the controlling member 140 disposed in the body 100 is open to allow cool and hot water to be mixed therein through the manifolds 150 or 250 connected to the cool water flow path pipes 260 and 360 and the hot water flow path pipes 270 and 370, and next, the mixed water is supplied to the user through the manifold 150 or 250 and the water outlet 122 of the discharging pipe 120.

According to the faucet manufactured in the above-mentioned process, the cool water flow path pipes 260 and 360 and the hot water flow path pipes 270 and 370, along which the cool and hot water and the mixed water move, are made of the polypropylene (PP) or polyethylene (PE) resin having no ill effects on the human, and further, the body 100 is made of the ABS resin capable of reducing the manufacturing cost (up to about 50%).

Further, the cool water flow path pipes 260 and 360 and the hot water flow path pipes 270 and 370 are made of the polypropylene (PP) or polyethylene (PE) resin having no ill effects on the human, thus preventing the harmful components of a synthetic resin from being supplied to the user in the state of being contained in the cool and hot water while they are being frequently contacted with the cool and hot water.

Furthermore, the cool water flow path pipes 260 and 360 and the hot water flow path pipes 270 and 370 are manufactured by means of double injection moulding, thus improving the productivity and decreasing the failure rate in manufacturing process.

Additionally, the body 100 is made of the ABS resin, thus preventing the old, the weak and the children from getting burnt even while they use hot water.

Further, the O-rings used in the assembling process of the conventional faucet are not needed at all, thus improving the manufacturing workability.

Also, since the cool water flow path pipes 260 and 360 and the hot water flow path pipes 270 and 370 have the square cross-sectional shapes, they are not twisted at all while in use.

Moreover, no separate process like welding or soldering in the assembling process of the parts of the faucet is required anymore.

### [Second embodiment]

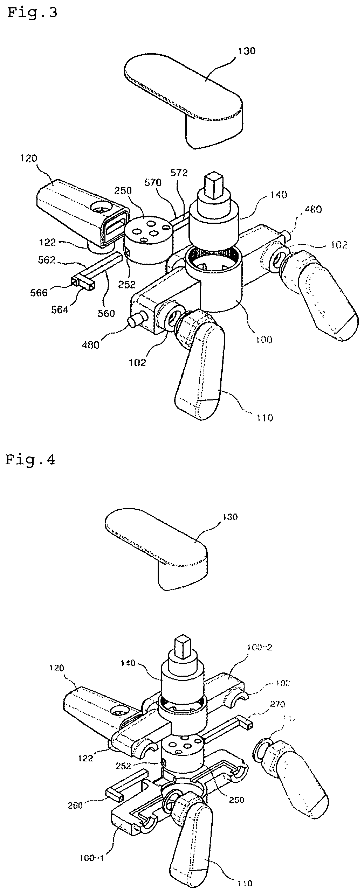

FIG.3 is an exploded perspective view showing a faucet manufactured by a method for manufacturing the faucet according to a second embodiment of the present invention. At this time, the corresponding parts in FIG.3 to those in FIGS.1 and 2 are indicated by corresponding reference numerals to each other.

In the same manner as in the first embodiment of the present invention, a method for manufacturing a faucet according to a second embodiment of the present invention includes the part preparing step, the cool and hot water flow path pipe coupling step, the double injection moulding step, and the assembling step.

In the part preparing step, first, metallic parts and non-metallic parts are prepared.

The metallic parts include eccentric sets 110, a discharging pipe 120, a water outlet 122, and an opening/closing lever 130.

On the other hand, the non-metallic parts include a controlling member 140, a manifold 250, a cool water flow path pipe 560, and a hot water flow path pipe 570. At this time, the manifold 250 is made of a polypropylene (PP) or polyethylene (PE) resin by means of injection moulding, the cool water flow path pipe 560 and the hot water flow path pipe 570 are made of a polypropylene (PP) or polyethylene (PE) resin by means of injection moulding, and a body 100 is made of an ABS resin.

Referring to FIG.3, the cool water flow path pipe 560 and the hot water flow path pipe 570 include horizontal members 562 and 572 arranged in parallel with the body 100 and vertical members 564 extended vertically from the end portions of the horizontal members 562 and 572. Further, extension members 566 are formed unitarily with the connection portions between the horizontal members 562 and 572 and the vertical members 564. The vertical member and the extension members of the hot water flow path pipe 570 are not shown in FIG.3.

Further, the vertical members 564 of the cool water flow path pipe 560 and the hot water flow path pipe 570 are connected to the cool and hot water pipes through the body 100 and connection pieces 102, and the horizontal members 562 and 572 are connected to the manifold 250.

Furthermore, the extensions members 566 are sealed by means of fitting members 480 formed on both sides of the body 100 in such a manner as to be passed through the body 100.

Also, the cool and hot water flow path pipes 560 and 570 have a square cross-sectional shape, thus preventing the twisting while in use.

Moreover, the manifold 250 has coupling grooves 252 having a square cross-section, and at this time, there are no separate O-rings for coupling the cool and hot water flow path pipes 560 and 570 with the manifold 250.

Further, the fitting members 480 have a circular cross-sectional shape, but desirably, they have a square cross-sectional shape so as to enhance their sealing effects.

After that, the prepared parts, that is, the cool and hot water flow path pipes 560 and 570 are coupled to the manifold 250.

Next, the manifold 250 to which the cool and hot water flow path pipes 560 and 570 are connected is moulded in such a manner as to inject a liquid type ABS resin into a space portion of a double injection mould (not shown) and to fill the space portion with the ABS resin, so that the manifold 250 to which the cool and hot water flow path pipes 560 and 570 are connected is surrounded with the body 100 designed to have a given shape.

After that, the body 100 in which the manifold 250 coupled to the cool and hot water flow path pipes 560 and 570 is accommodated is assembled to other parts constituting the faucet.

That is, the eccentric sets 110 are connected to the cool and hot water pipes, and then, the body 100 is connected to the eccentric sets 110 by means of connection pieces 102 disposed on the rear surface thereof.

Further, the controlling member 140 connected to the manifold 250 and the opening/closing lever 130 are assembled to the top surface of the body 100, and the discharging pipe 120 is assembled to the front surface of the body 100.

If water is turned on through the manipulation of the opening/closing lever 130 of the faucet assembled in the above-mentioned manner, the controlling member 140 disposed in the body 100 is open to allow cool and hot water to be mixed therein through the manifold 250 connected to the cool and hot water flow path pipes 560 and 570, and next, the mixed water is supplied to the user through the manifold 250 and the water outlet 122 of the discharging pipe 120.

According to the faucet manufactured in the above-mentioned process, the cool and hot water flow path pipes 560 and 570, along which the cool and hot water and the mixed water move, are made of the polypropylene (PP) or polyethylene (PE) resin, and further, the body 100 is made of the ABS resin capable of reducing the manufacturing cost.

Further, the cool and hot water flow path pipes 560 and 570 are made of the polypropylene (PP) or polyethylene (PE) resin having no ill effects on the human, thus preventing the harmful components of a synthetic resin from being supplied to the user in the state of being contained in the cool and hot water while they are being frequently contacted with the cool and hot water.

Furthermore, the cool and hot water flow path pipes 560 and 570 are manufactured by means of double injection moulding, thus improving the productivity and decreasing the failure rate in manufacturing process.

Additionally, the body 100 is made of the ABS resin, thus preventing the old, the weak and the children from getting burnt even while they use hot water.

Further, the O-rings used in the assembling process of the conventional faucet are not needed at all, thus improving the manufacturing workability, and also, since the cool and hot water flow path pipes 560 and 570 have the square cross-sectional shape, they are not twisted at all while in use.

Moreover, no separate process like welding or soldering in the assembling process of the parts of the faucet is required anymore.

### [Third embodiment]

FIGS.4 and 5 are exploded perspective views showing a faucet manufactured by a method for manufacturing the faucet according to a third embodiment of the present invention. At this time, the corresponding parts in FIGS.4 and 5 to those in FIGS.1 and 2 are indicated by corresponding reference numerals to each other.

In the same manner as in the first embodiment of the present invention, a method for manufacturing a faucet according to a third embodiment of the present invention includes the part preparing step, the cool and hot water flow path pipe coupling step, the double injection moulding step, and the assembling step.

In the part preparing step, first, metallic parts and non-metallic parts are prepared.

The metallic parts include eccentric sets 110, a discharging pipe 120, a water outlet 122, and an opening/closing lever 130.

The non-metallic parts include a controlling member 140, manifolds 150 and 250, cool water flow path pipes 260 and 360, hot water flow path pipes 270 and 370, a lower body 100-1 and an upper body 100-2. At this time, the manifolds 150 and 250 are made of a polypropylene (PP) or polyethylene (PE) resin having no ill effects on the human by means of injection moulding, and the lower body 100-1 and the upper body 100-2 are made of an ABS resin in view of manufacturing cost and productivity.

First, the cool water flow path pipes 260 and 360 and the hot water flow path pipes 270 and 370 are made of the polypropylene (PP) or polyethylene (PE) resin having no ill effects on the human by means of injection moulding, and they have the square cross-sectional shape, thus preventing the occurrence of twisting while in use.

Referring first to FIG.4, the cool and hot water flow path pipes 260 and 270 are connected to coupling grooves 252 formed on the manifold 250 on one end portion thereof.

Referring to FIG.5, next, the cool and hot water flow path pipes 360 and 370 are connected to coupling grooves 152 formed on the manifold 150 on one end portion thereof and to flow path connection members 180 on the other end portion thereof. The flow path connection members 180 are connected to the cool and hot water flow path pipes 360 and 370 on one side thereof and connected to the cool and hot water pipes mounted on a wall surface through the lower body 100-1 and the upper body 100-2 and connection pieces 102 on the other side thereof.

After that, the prepared parts, that is, the cool and hot water flow path pipes are coupled to each other. As shown in FIG.4, the cool and hot water flow path pipes 260 and 270 are coupled to the manifold 250, or, as shown in FIG.5, the cool and hot water flow path pipes 360 and 370 are coupled to the flow path connection members 180 and the manifold 150.

At this time, the flow path connection members 180 are made of the polypropylene (PP) or polyethylene (PE) resin having no ill effects on the human.

Next, the manifold 150 or 250 to which the cool water flow path pipes 260 and 360 and the hot water flow path pipes 270 and 370 are connected or to which the cool water flow path pipes 260 and 360 and the hot water flow path pipes 270 and 370 and the flow path connection members 180 are connected is moulded in such a manner as to inject a liquid type ABS resin into a space portion of a double injection mould (not shown) and to fill the space portion with the ABS resin, so that the manifold 150 or 250 to which the cool water flow path pipes 260 and 360 and the hot water flow path pipes 270 and 370 are connected is surrounded with the lower body 100-1 and the upper body 100-2.

After that, the lower body 100-1 and the upper body 100-2 in which the manifold 150 or 250 coupled to the cool water flow path pipes 260 and 360 and the hot water flow path pipes 270 and 370 is accommodated are assembled to other parts constituting the faucet.

That is, the eccentric sets 110 are connected to the cool and hot water pipes disposed on the wall surface, and then, the lower body 100-1 and the upper body 100-2 are connected to the eccentric sets 110 by means of the connection pieces 102 and packings 112 disposed on the rear surface of the coupled portion therebetween.

Further, the controlling member 140 connected to the manifold 150 or 250 and the opening/closing lever 130 are assembled to the top surface of the coupled portion between the lower body 100-1 and the upper body 100-2, and the discharging pipe 120 is assembled to the front surface of the coupled portion between the lower body 100-1 and the upper body 100-2.

If water is turned on through the manipulation of the opening/closing lever 130 of the faucet assembled in the above-mentioned manner, the controlling member 140 is open to allow cool and hot water to be mixed therein through the manifold 150 or 250 connected to the cool water flow path pipes 260 and 360 and the hot water flow path pipes 270 and 370, and next, the mixed water is supplied to the user through the manifold 150 or 250 and the water outlet 122 of the discharging pipe 120.

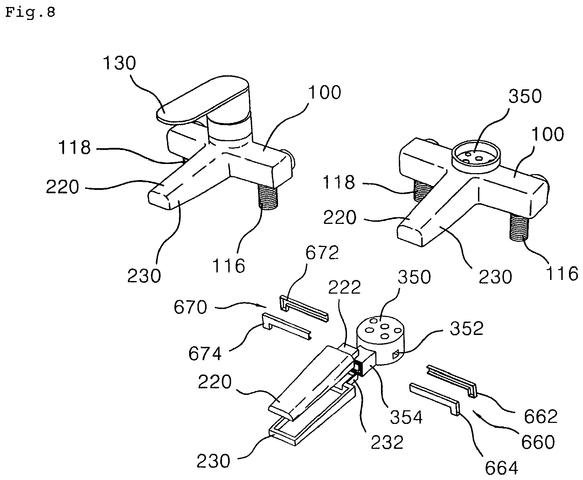

On the other hand, the faucets as shown in FIGS.1 to 5 are applied to a bathroom shower, and the eccentric sets 110 are connected to the cool and hot water pipes through a connection member 114 as shown in FIG.8.

According to the faucet manufactured in the above-mentioned process, the cool water flow path pipes 260 and 360 and the hot water flow path pipes 270 and 370, along which the cool and hot water and the mixed water move, are made of the polypropylene (PP) or polyethylene (PE) resin, and further, the lower body 100-1 and the upper body 100-2 are made of the ABS resin capable of reducing the manufacturing cost.

Further, the cool water flow path pipes 260 and 360 and the hot water flow path pipes 270 and 370 are made of the polypropylene (PP) or polyethylene (PE) resin having no ill effects on the human, thus preventing the harmful components of a synthetic resin from being supplied to the user in the state of being contained in the cool and hot water while they are being frequently contacted with the cool and hot water.

Furthermore, the cool water flow path pipes 260 and 360 and the hot water flow path pipes 270 and 370 are manufactured by means of double injection moulding, thus improving the productivity and decreasing the failure rate in manufacturing process.

Additionally, the lower body 100-1 and the upper body 100-2 are made of the ABS resin, thus preventing the old, the weak and the children from getting burnt even while they use hot water.

Further, no O-rings are needed, thus improving the manufacturing workability, and since the cool water flow path pipes 260 and 360 and the hot water flow path pipes 270 and 370 have the square cross-sectional shape, they are not twisted at all while in use.

Moreover, no separate process like welding or soldering in the assembling process of the parts of the faucet is required anymore.

### [Fourth embodiment]

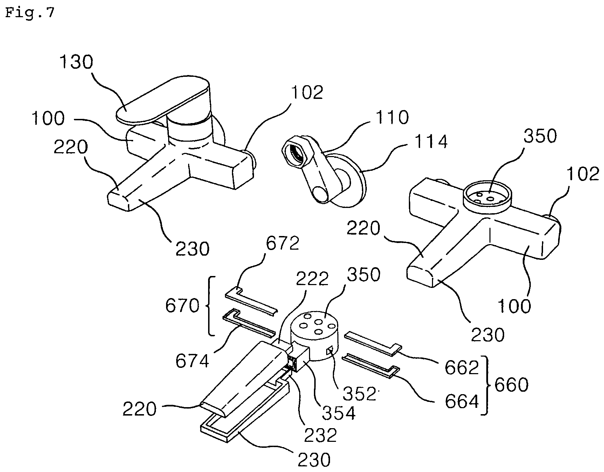

FIGS.7 and 8 are exploded perspective views showing a faucet manufactured by a method for manufacturing the faucet according to a fourth embodiment of the present invention. At this time, the corresponding parts in FIGS.7 and 8 to those in FIGS.1 and 2 are indicated by corresponding reference numerals to each other.

The faucet as shown in FIG.7 is applied to a shower, and the faucet as shown in FIG.8 to a wash basin.

In the same manner as in the first embodiment of the present invention, a method for manufacturing a faucet according to a fourth embodiment of the present invention includes the part preparing step, the cool and hot water flow path pipe coupling step, the double injection moulding step, and the assembling step.

In the part preparing step, first, metallic parts and non-metallic parts are prepared.

The metallic parts include an eccentric set 110, a connection member 114, a cool water connection pipe 116, a hot water connection pipe 118, and an opening/closing lever 130.

The non-metallic parts include a controlling member (not shown, and see the reference numeral 140 of FIG. 1), a manifold 350, cool and hot water flow path pipes 660 and 670, and upper and lower discharging pipes 220 and 230. A water outlet (see the reference numeral 122 of FIG.1) is not shown in FIGS.7 and 8.

At this time, the manifold 350 is made of a polypropylene (PP) or polyethylene (PE) resin and has coupling grooves 352 having a square cross-sectional shape and a coupling protrusion 354 formed unitarily with one side of the outer peripheral surface thereof.

Further, the upper and lower discharging pipes 220 and 230 are symmetrical to each other and have coupling protrusions 222 and 232 formed on the front end portions thereof, so that when they are connected to each other by means of bonding or fitting, the coupling protrusions 222 and 232 are slidingly coupled to the outer surface of the coupling protrusion 354 of the manifold 350.

At this time, the upper and lower discharging pipes 220 and 230 are made of a polypropylene (PP) or polyethylene (PE) resin. They are separately formed from each other, as shown in FIGS.7 and 8, but of course, they may be formed as a single body.

Also, the cool and hot water flow path pipes 660 and 670 are made of the polypropylene (PP) or polyethylene (PE) resin. According to the present invention, they are separated from each other in a symmetrical relation to each other through first caps 662 and 672 and second caps 664 and 674, but of course, they may be formed to have a unitary structure.

Referring first to FIG.7, the cool and hot water flow path pipes 660 and 670 are connected to the coupling grooves 352 formed on the manifold 350 on one end portion thereof.

Referring to FIG.8, next, the cool and hot water flow path pipes 660 and 670 are connected to the coupling grooves 352 formed on the manifold 350 on one end portion thereof and to the cool water connection pipe 116 and the hot water connection pipe 118 on the other end portion thereof.

After that, the prepared parts, that is, the upper and lower discharging pipes 220 and 230 and the cool and hot water flow path pipes 660 and 670 are coupled to the manifold 350.

Next, the manifold 350 to which the upper and lower discharging pipes 220 and 230 and the cool and hot water flow path pipes 660 and 670 are coupled is moulded in such a manner as to inject a liquid type ABS resin into a space portion of a double injection mould (not shown) and to fill the space portion with the ABS resin, so that the manifold 350 is surrounded with a body 100 designed to have a given shape, and the upper and lower discharging pipes 220 and 230 are open through post process after assembled to each other.

After that, the body 100 in which the manifold 350 coupled to the cool and hot water flow path pipes 660 and 670 is accommodated is assembled to other parts constituting the faucet.

As shown in FIG.7, that is, the eccentric set 110 is connected to the cool and hot water pipes disposed on the wall surface through the connection member 114, and then, the body 100 is connected to the eccentric set 110 by means of the connection pieces 102 disposed on the rear surface thereof.

Further, the controlling member connected to the manifold 350 and the opening/closing lever 130 are assembled to the top surface of the body 100.

As shown in FIG.8, further, the cool water connection pipe 116 and the hot water connection pipe 118 are connected to the cool and hot water pipes disposed on the wall surface, and then, the controlling member connected to the manifold 350 and the opening/closing lever 130 are assembled to the top surface of the body 100.

If water is turned on through the manipulation of the opening/closing lever 130 of the faucet assembled in the above-mentioned manner, the controlling member is open to allow cool and hot water to be mixed therein through the manifold 350 connected to the cool and hot water flow path pipes 660 and 670, and next, the mixed water is supplied to the user through the manifold 350 and the water outlets of the upper and lower discharging pipes 220 and 230.

According to the fourth embodiment of the present invention, the method for manufacturing the faucet can remove polishing process. That is, the faucet as shown in FIGS.1 to 5 is configured wherein after the discharging pipe 120 is bonded to the body 100, the bond liquid may leak from the space between the machined portions formed on the front end portion of the discharging pipe 120 and the centre portion of the body 100, thus causing the outer appearance of the faucet to become bad. As a result, the leaking bond liquid should be removed through a separate polishing process. According to the fourth embodiment of the present invention, however, the upper and lower discharging pipes 220 and 230 are formed in a mould through injection moulding in the state of being coupled to the manifold 350, thus making it unnecessary to perform the polishing process. As a result, the manufacturing workability is increased, and the outer appearance of the faucet is improved.

According to the faucet manufactured in the above-mentioned process, the cool and hot water flow path pipes 660 and 670, along which the cool and hot water and the mixed water move, are made of the polypropylene (PP) or polyethylene (PE) resin having no ill effects on the human, and further, the body 100 is made of the ABS resin capable of reducing the manufacturing cost.

Further, the cool and hot water flow path pipes 660 and 670 are made of the polypropylene (PP) or polyethylene (PE) resin having no ill effects on the human, thus preventing the harmful components of a synthetic resin from being supplied to the user in the state of being contained in the cool and hot water while they are being frequently contacted with the cool and hot water.

Furthermore, the cool and hot water flow path pipes 660 and 670 are manufactured by means of double injection moulding, thus improving the productivity and decreasing the failure rate in manufacturing process.

Additionally, the body 100 is made of the ABS resin, thus preventing the old, the weak and the children from getting burnt even while they use hot water.

Further, no O-rings are needed, thus improving the manufacturing workability, and since the cool and hot water flow path pipes 660 and 670 have the square cross-sectional shape, they are not twisted at all while in use.

Moreover, no separate process like welding or soldering in the assembling process of the parts of the faucet is required anymore.

Furthermore, it is unnecessary to perform the polishing process, thus increasing the manufacturing workability and improving the outer appearance of the faucet.

### [Fifth embodiment]

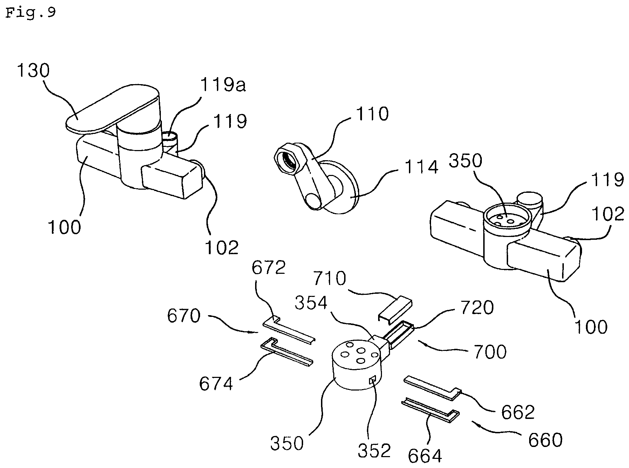

FIG.9 is an exploded perspective view showing a faucet manufactured by a method for manufacturing the faucet according to a fifth embodiment of the present invention. At this time, the corresponding parts in FIG.9 to those in FIGS.7 and 8 are indicated by corresponding reference numerals to each other, and the faucet as shown in FIG.9 is a cobra faucet.

In the same manner as in the first embodiment of the present invention, a method for manufacturing a faucet according to a fifth embodiment of the present invention includes the part preparing step, the cool and hot water flow path pipe coupling step, the double injection moulding step, and the assembling step.

In the part preparing step, first, metallic parts and non-metallic parts are prepared.

The metallic parts include an eccentric set 110, a connection member 114, and an opening/closing lever 130.

The non-metallic parts include a controlling member (see the reference numeral 140 of FIG.1), a manifold 350, cool and hot water flow path pipes 660 and 670, and a discharging pipe 700 from which cool and hot water or mixed water is discharged.

At this time, the manifold 350 is made of a polypropylene (PP) or polyethylene (PE) resin and has coupling grooves 352 having a square cross-sectional shape and a coupling protrusion 354 formed unitarily with one side of the outer peripheral surface thereof.

Further, the cool and hot water flow path pipes 660 and 670 are made of the polypropylene (PP) or polyethylene (PE) resin by means of injection moulding, and they are separated from each other in a symmetrical relation to each other through first caps 662 and 672 and second caps 664 and 674. Of course, they may be formed to have a unitary structure.

Further, the cool and hot water flow path pipes 660 and 670 are connected to the coupling grooves 352 formed on the manifold 350 on one end portion thereof and to the cool and hot water pipes through the connection pieces 102 on the other end portion thereof.

The discharging pipe 700 includes upper and lower flow path pipes 710 and 720 symmetrical to each other, and in the state where the upper and lower flow path pipes 710 and 720 are connected to each other by means of bonding or fitting, they are slidingly coupled to the outer surface of the coupling protrusion 354 of the manifold 350.

At this time, the upper and lower flow path pipes 710 and 720 are made of the polypropylene (PP) or polyethylene (PE) resin. They are separately formed from each other, as shown in FIG.9, but of course, they may be formed as a single body.

As shown in FIG.9, the upper and lower flow path pipes 710 and 720 are linearly formed, but desirably, they have an L-shaped cross-sectional shape, thus making it easy to be connected to a kitchen cobra as will be discussed later.

After that, the prepared parts, that is, the upper and lower flow path pipes 710 and 720 and the cool and hot water flow path pipes 660 and 670 are coupled to the manifold 350.

Next, the manifold 350 to which the upper and lower flow path pipes 710 and 720 and the cool and hot water flow path pipes 660 and 670 are coupled is moulded in such a manner as to inject a liquid type ABS resin into a space portion of a double injection mould (not shown) and to fill the space portion with the ABS resin, so that the manifold 350 is surrounded with a body 100 designed to have a given shape.

After that, the body 100 in which the manifold 350 coupled to the cool and hot water flow path pipes 660 and 670 is accommodated is assembled to other parts constituting the faucet.

As shown in FIG.9, that is, the eccentric set 110 is connected to the cool and hot water pipes disposed on the wall surface through the connection member 114, and then, the body 100 is connected to the eccentric set 110 by means of the connection pieces 102 disposed on the rear surface thereof.

Further, the controlling member connected to the manifold 350 and the opening/closing lever 130 are assembled to the top surface of the body 100. At this time, a cobra connector 119 is formed on the centre of the rear surface of the body 100 so as to connect a kitchen cobra (not shown) thereto, and the cobra connector 119 is open to form an open hole 119a through post processing. Next, the kitchen cobra is connected to the open hole 119a.

If water is turned on through the manipulation of the opening/closing lever 130 of the faucet assembled in the above-mentioned manner, the controlling member is open to allow cool and hot water to be mixed therein through the manifold 350 connected to the cool and hot water flow path pipes 660 and 670, and next, the mixed water is supplied to the user through the manifold 350, the upper and lower flow path pipes 710 and 720, and the kitchen cobra.

According to the faucet manufactured in the above-mentioned process, the cool and hot water flow path pipes 660 and 670, along which the cool and hot water and the mixed water move, are made of the polypropylene (PP) or polyethylene (PE) resin having no ill effects on the human, and further, the body 100 is made of the ABS resin capable of reducing the manufacturing cost.

Further, the cool and hot water flow path pipes 660 and 670 are made of the polypropylene (PP) or polyethylene (PE) resin having no ill effects on the human, thus preventing the harmful components of a synthetic resin from being supplied to the user in the state of being contained in the cool and hot water while they are being frequently contacted with the cool and hot water.

Furthermore, the cool and hot water flow path pipes 660 and 670 are manufactured by means of double injection moulding, thus improving the productivity and decreasing the failure rate in manufacturing process.

Additionally, the body 100 is made of the ABS resin, thus preventing the old, the weak and the children from getting burnt even while they use hot water.

Further, no O-rings are needed, thus improving the manufacturing workability, and since the cool and hot water flow path pipes 660 and 670 have the square cross-sectional shape, they are not twisted at all while in use.

Moreover, no separate process like welding or soldering in the assembling process of the parts of the faucet is required anymore.

As described above, the method for manufacturing the faucet according to the present invention has the following advantages.

Firstly, the cool and hot water flow path pipes along which the cool water and the hot water flow are made of the polypropylene (PP) or polyethylene (PE) resin having no ill effects on the human and the body is made of the ABS resin, thus reducing the manufacturing cost thereof.

Secondly, the cool and hot water flow path pipes are made of the polypropylene (PP) or polyethylene (PE) resin, thus preventing harmful components of the synthetic resin from being supplied to a user in the state of being contained in cool and hot water, while they are being frequently contacted with the cool and hot water.

Thirdly, high productivity through double injection moulding and low failure rate in manufacturing process are all achieved.

Fourthly, the body is made of the ABS resin, thus preventing the old and the weak or the children from getting burnt even while they use hot water.

Fifthly, the O-rings used in the assembling process of the conventional faucet are not needed at all, thus improving the manufacturing workability.

Sixthly, the cool and hot water flow path pipes have the square cross-sectional shapes, so that they are not twisted at all while in use.

Seventhly, no separate process like welding or soldering is needed in the assembling process of the parts of the faucet.

Lastly, no separate polishing process is needed, thus enhancing the workability thereof and the outer appearance thereof.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A method for manufacturing a faucet, comprising the steps of:
preparing metallic parts and non-metallic parts, including a manifold (150; 250) adapted to supply cool and hot water to a controlling member (140), and cool and hot water flow path pipes (260, 270; 360, 370);
coupling the cool and hot water flow path pipes (260, 270) to the manifold (250) or coupling the cool and hot water flow path pipes (360, 370) to flow connection members (180) and the manifold (150);
moulding a lower body (100-1) and an upper body (100-2) around the manifold (150) to which the cool and hot water flow path pipes (360, 370) and the flow path connection members (180) are coupled or the manifold (250) to which the cool and hot water flow path pipes (260, 270) are coupled in such a manner as to inject a resin into a space portion of a double injection mould and to fill the space portion with the resin, so that the manifold (150; 250) to which the cool and hot water flow path pipes (260, 270; 360, 370) are coupled is surrounded with the lower body (100-1) and the upper body (100-2); and
assembling the lower body (100-1) and the upper body (100-2) in which the manifold (150; 250) coupled to the cool and hot water flow path pipes (260, 270; 360, 370) is accommodated to other parts constituting the faucet;
**characterized in that** the resin is a liquid type ABS resin.

2. A faucet manufactured by the method for manufacturing the faucet according to claim 1.

## Patentansprüche

1. Verfahren zum Fertigen einer Mischbatterie, das folgende Schritte umfasst:
Herstellen von Metallteilen und Nichtmetallteilen einschließlich eines Verteilers (150; 250), der so ausgelegt ist, dass er kaltes und heißes Wasser zu einem Regelelement (140) leitet, und Kalt- und Heißwasserströmungswegleitungen (260, 270; 360, 370),
Verbinden der Kalt- und Heißwasserströmungswegleitungen (260, 270) mit dem Verteiler (250) oder Verbinden der Kalt- und Heißwasserströmungswegleitungen (360, 370) mit Strömungsanschlusselementen (180) und dem Verteiler (150), Formen eines unteren Körpers (100-1) und eines oberen Körpers (100-2) um den Verteiler (150) herum, mit dem die Kalt- und Heißwasserströmungswegleitungen (360, 370) und die Strömungsweganschlusselemente (180) verbunden sind, oder um den Verteiler (250) herum, mit dem die Kalt- und Heißwasserströmungswegleitungen (260, 270) verbunden sind, auf eine Weise, bei der ein Kunstharz in einen Zwischenraumabschnitt einer doppelten Spritzgießform eingespritzt und der Zwischenraumabschnitt mit dem Kunstharz gefüllt wird, so dass der Verteiler (150; 250), mit dem die Kalt- und Heißwasserströmungswegleitungen (260, 270; 360, 370) verbunden sind, von dem unteren Körper (100-1) und dem oberen Körper (100-2) umgeben ist, und
Zusammenbauen des unteren Körpers (100-1) und des oberen Körpers (100-2), in denen der mit den Kalt- und Heißwasserströmungswegleitungen (260, 270; 360, 370) verbundene Verteiler (150; 250) aufgenommen ist, mit anderen Teilen, die die Mischbatterie bilden,
**dadurch gekennzeichnet, dass** es sich bei dem Kunstharz um ein flüssiges ABS handelt.

2. Mischbatterie, die über das Verfahren zum Fertigen der Mischbatterie nach Anspruch 1 gefertigt ist.

## Revendications

1. Procédé de fabrication d'un robinet, comprenant les étapes consistant à :
préparer des pièces métalliques et des pièces non métalliques, comportant un collecteur (150 ; 250) adapté pour fournir de l'eau froide et de l'eau chaude à un élément de commande (140), et des tuyaux de trajets d'écoulement d'eau froide et d'eau chaude (260, 270 ; 360, 370) ;
coupler les tuyaux de trajets d'écoulement d'eau froide et d'eau chaude (260, 270) au collecteur (250) ou coupler les tuyaux de trajets d'écoulement d'eau froide et d'eau chaude (360, 370) à des éléments de raccordement d'écoulement (180) et au collecteur (150) ;
mouler un corps inférieur (100-1) et un corps supérieur (100-2) autour du collecteur (150) auquel les tuyaux de trajets d'écoulement d'eau froide et d'eau chaude (360, 370) et les éléments de raccordement de trajets d'écoulement (180) sont couplés ou du collecteur (250) auquel les tuyaux de trajets d'écoulement d'eau froid et d'eau chaude (260, 270) sont couplés de manière à injecter une résine dans une partie d'espace d'un moule à injection double et à remplir la partie d'espace par la résine, de sorte que le collecteur (150; 250) auquel les tuyaux de trajets d'écoulement d'eau froide et d'eau chaude (260, 270 ; 360, 370) sont couplés soit entouré par le corps inférieur (100-1) et le corps supérieur (100-2) ; et
assembler le corps inférieur (100-1) et le corps supérieur (100-2), dans lequel le collecteur (150 ; 250) couplé aux tuyaux de trajets d'écoulement d'eau froide et d'eau chaude (260, 270 ; 360, 370) est reçu dans d'autres parties constituant le robinet ;
**caractérisé en ce que** la résine est une résine ABS de type liquide.

2. Robinet fabriqué par le procédé de fabrication du robinet selon la revendication 1.
